# EUROPEAN PATENT APPLICATION

(11) **EP 4 576 666 A1**
(43) Date of publication of application: **25.06.2025**
(21) Application number: 23219791.3
(22) Date of filing: 22.12.2023
(51) Int. Cl.: H04L 9/40, G06F 21/31, G06F 21/55, G06Q 50/00, H04L 67/50

(54) **METHOD AND SYSTEM FOR IDENTITY FRAUD DETECTION AND SYSTEM AGNOSTIC USER AUTHENTICATION IN SOCIAL MEDIA AND COMMUNICATION NETWORK SYSTEMS**

(71) Applicant: Unify Beteiligungsverwaltung GmbH & Co. KG, 81739 München (DE)
(72) Inventor: Papadimitriou, Christina, 14235 Nea Ionia (GR); Andriopoulou, Foteini, 25002 Patras (GR); Lederer, Thomas, 82211 Herrsching (DE)
(74) Representative: Schaafhausen, Anne

(57) **Abstract**

The invention relates to a method for identity fraud detection and system agnostic user authentication in social media and communication applications, and a system for performing said method. The present invention provides an enhanced risk identification based on historic data by using an automatic authentication mechanism for a potential malicious user without relying on the system on which a communication is taking place. The authentication mechanism is system agnostic, it may also create synergies with other social media and communication network systems informing them about malicious actions of an account that has been taken over.

## Description

The present invention relates to a method for identity fraud detection and system agnostic user authentication in social media and communication applications, and a system for performing said method.

Identity fraud and social hacking via social networks and communication applications is a very threatening security problem for enterprises and individuals. Hackers get access to sensible information when accounts get taken over or hijacked. Identity fraud can have severe financial, emotional, reputational, and legal consequences for the victims, be it individuals or enterprises. Victims often spend a significant amount of time and effort clearing their name and resolving the financial damage caused by the fraud.

Identifying and blocking hackers that perform malicious actions such as spamming, cyber blackmail, phishing, anonymous access to the network, theft of confidential data, etc., are used to prevent identity fraud. Currently used actions of identifying and blocking attackers are based on identifying fake email addresses, information about fake accounts with financial organizations or payment systems, and/or malicious links that allow attackers to deliver victims to the computing device files with malicious content, install malicious software on the victim's computing device, redirect to a fake website, etc. In addition, the prior art relies on authenticating a user upon login, and, if the user has selectively activated 2 factor authentication (2FA), they may periodically be asked to enter a PIN or reauthenticate themselves. A malicious user is excluded by the system only after another user had been hacked and he/she has decided to report the malicious act to the system which may be too late. Also, there is currently no solution offered to inform other users or applications of the identified malicious user to warn them. These challenges are often a bigger risk for people with disabilities or elderly people. For example, a person with visual impairment may not be able to suggest to other users to open their camera to verify with whom they are talking. Also, a person with cognitive issues may not realize any change in their interaction with the hacker, etc. Therefore, for people with disabilities or elderly people, it may be too late either realizing that the use is malicious, or they may depend on someone else within the system to report the malicious user as such.

Thus, the aim of the present invention is to overcome the drawbacks of the prior art and to provide an enhanced risk identification based on historic data.

Therefore, the present invention is based on the object to provide a method for identity fraud detection and system agnostic user authentication in social media and communication applications, and a corresponding system for performing the method.

This object is solved by a method having the features according to claim 1, and a system having the features of claim 9. Preferred embodiments of the invention are defined in the respective dependent claims.

In particular, a method and a system are provided which not only identify potential malicious actions but provide an automatic authentication mechanism for a malicious attacker protecting the potential victim(s) without relying on the system on which a communication is taking place. The authentication mechanism is system agnostic, it may also create synergies with other social media and communication network systems informing them about malicious actions of an account that has been taken over.

The present invention provides an automated and semi-automated authentication mechanism based on the severity of the risk identification in the range of moderate to critical, low to high. Thus, the authentication mechanism is not based on biometrics and/or multi-factor authentication (MFA) as described in the prior art that can be easily hacked but is focused on a combination of recognition mechanisms like image and video in correlation with pattern, voice, and text recognition, together with the usage of historic data and with the collaboration of other users with whom the user under attack shares conversations with.

In the meaning of the present invention, the terms hacker, malicious user, and (malicious) attacker are used interchangeably throughout the description for an individual who engages in unauthorized and malicious activities such as exploiting vulnerabilities for personal gain or engaging in cybercrimes like identity theft, fraud, or cyberattacks.

In the meaning of the present invention, the terms "network system(s)" and "application(s)/app(s)" are used interchangeably throughout the description for a computer program designed to carry out a specific task other than one relating to the operation of the computer itself, typically to be used by end users.

In the meaning of the present invention, the term "social media application" refers to the range of web or mobile applications based on web (internet) technologies that enable users to socially interact with one another online. These applications allow users to gather, represent, process, use, and disseminate information online in diverse ways and through a variety of media, producing dynamic virtual spaces - "online communities" - which share information on the Web.

In the meaning of the present invention, a "communication application" is a software application or mobile application designed to facilitate the exchange of information, messages, and media between individuals or groups. These apps enable users to connect with one another through various forms of communication, such as text messaging, voice calls, video calls, and sharing files or multimedia content. Communication apps can be used on smartphones, tablets, desktop computers, and other devices, allowing people to communicate in real-time or asynchronously over the internet or other communication networks. They are commonly used for personal, professional, or social purposes to keep in touch, collaborate, or share information with others.

According to the invention, a method for identity fraud detection and system agnostic user authentication in social media and communication applications is provided, wherein the method comprises the steps of registering, by a first user/user device, to a system; communicating, by the first user, with a second user; monitoring, by the system, the activities of the two users on the application(s) to identify and notify malicious action(s); taking over, by a malicious user, the account of the second user; trying, by the malicious user, to take over the account of the first user; identifying, by the system, a risk for malicious action(s); triggering, by the system, a mechanism to authenticate the second user; notifying, by the system, the first user, in case the authentication is not successful; notifying, by the system, other applications on the first user's device, in case the authentication is not successful.

According to a preferred embodiment, the step of registering of the first user further comprises granting, by the first user, consensus to monitor the activity and data during the usage of the application(s).

More preferably, granting comprises providing access to the first user's contact information and profile information on the application(s) the first user has signed up with.

According to another preferred embodiment, the step of monitoring comprises collecting, filtering, creating, and storing patterns of the first user's activity(s) and/or communication(s) on the application(s).

According to yet another preferred embodiment, the patterns are stored using different datasets including text datasets, media datasets, and/or image datasets.

According to another preferred embodiment, the activities of two or more users on the application(s) are monitored by the system.

Further, according to another preferred embodiment, the step of risk identification comprises using classification algorithms and/or regression algorithms.

According to still another preferred embodiment, the mechanism to authenticate the second user comprises a user-driven and/or an automated mechanism.

According to another aspect of the invention, a system for identity fraud detection and system agnostic user authentication in social network and communication applications is provided, wherein the system is configured to perform the method according to the invention.

According to a preferred embodiment, the system comprises a monitoring component, a risk identification component, an authentication component and/or a notification component.

According to still another preferred embodiment, the monitoring component collects, filters, creates and stores patterns of the first user's communication(s) on multiple social media and communication applications the first user has signed up with.

Further, according to another preferred embodiment, the risk identification component monitors the communication(s) of the first user in real time and identifies potential abnormalities.

According to still another preferred embodiment, the authentication component carries out an additional on demand user authentication using
a) user-driven data based on dynamic questions related to recent exchanges or personal contact info, and/or
b) automated mechanisms used by the system to directly authenticate the potential malicious user with a Chat as a Service (CaaS) mechanism.

According to yet another embodiment, the notification component is used to alert the user that got hacked and to warn other users that are networked with said user as well as other application(s) of said user.

It has also to be noted that aspects of the invention have been described with reference to a one-to-one communication situation. However, the present invention is also applicable to group conversations wherein the account of one group member has been taken over by a hacker.

In addition, aspects of the invention have been described with reference to different subject-matters. In particular, some aspects or embodiments have been described with reference to system type claims whereas other aspects have been described with reference to method type claims. However, a person skilled in the art will gather from the above and the following description that, unless otherwise notified, in addition to any combination between features belonging to one type of subject-matter also any combination between features relating to different types of subject-matters is considered to be disclosed with this text. In particular, combinations between features relating to the system type claims and features relating to the method type claims are considered to be disclosed. The invention and embodiments thereof will be described below in further detail in connection with the drawing(s).
- Fig. 1: shows a schematic illustration of the method according to an embodiment of the invention;
- Fig. 2: shows a schematic illustration of the system according to an embodiment of the invention;
- Fig. 3: shows a flowchart of the system according to another embodiment of the invention;
- Fig. 4: shows a flowchart of the authentication according to an embodiment of the invention.

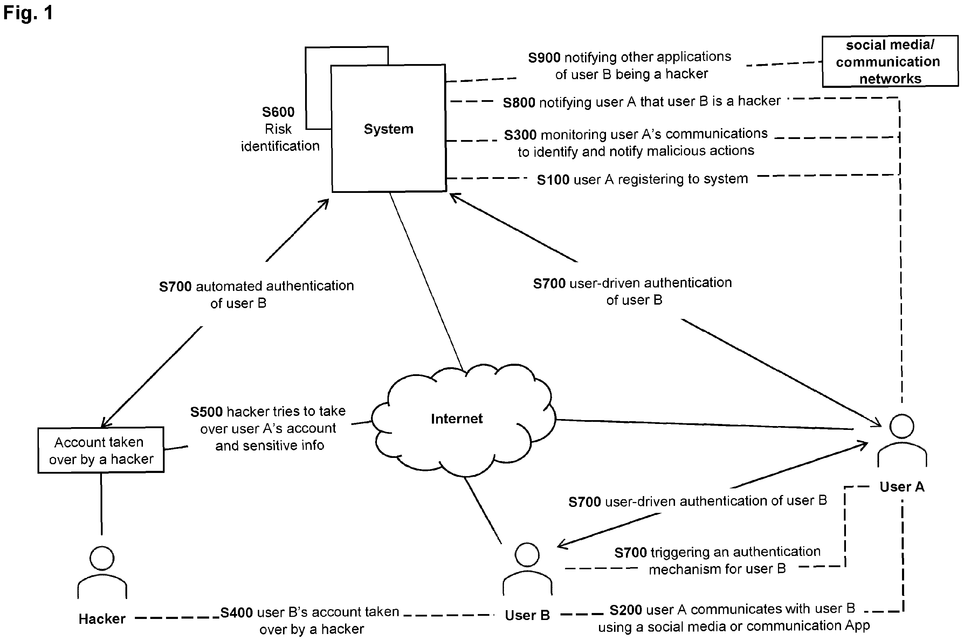

In **Fig. 1****,** a schematic illustration of an overview of the steps of the method according to an embodiment of the invention is shown. In step S100, a first user, user A, is registering to a system and provides information related to the social media and communication application(s) that he/she uses as well as his/her profile and contact information. Moreover, user A may grant his/her consensus to monitor the activity and data during the usage of social media and communication application(s). In step S200, user A and a second user, user B, have a conversation via one of the applications on the users' devices. In step S300, the content of the conversation is monitored by the system which user A has registered to in step S100. The content of the conversation may be used to train a machine learning (ML) model based on usage and frequency of features monitored by the system in said conversation that may be used later. For example, user B may use short answers and exclamation marks in every sentence. Moreover, at the beginning of each conversation, user B may prefer to use user A's nickname. This data may be used for identifying and predicting a malicious attack.

In step S400, the account of the second user, user B, has been taken over by a hacker. In the next step, S500, the hacker tries to take over user A's account and retrieve sensitive information regarding user A. In this context, a message may be sent to user A through user B's account requesting a verification of a code or something similar to take over user A's account. No suspicious links or any common technique that hackers usually use, just a single text with a text content. The inventive system monitors this conversation and identifies that there was neither any reference to user A's nickname nor an exclamation mark, etc. which user B used previously. Due to this deviation of a specific pattern, the system identifies a risk for a malicious action in step S600 and raises a flag regarding a potential malicious attack and notifies/alerts user A. The risk is classified according to its severity into low, medium and/or high. Then, in step S700, a mechanism to authenticate user B is triggered. Based on the severity of the risk, the inventive system may apply two alternative mechanisms of authentication either user-driven or automatically. The system may also apply both authentication mechanisms together, i.e. user-driven and automatically. By monitoring the media communication between user A and user B, the system may, based on the severity of the risk, propose and forward a set of automatically generated questions to user A which he/she can ask user B, and may then evaluate the responses. In high and critical severity issues, the system may provide an alternative authentication mechanism by directly reaching out to the suspicious contact, based on recognition algorithms. For example, the system may request from user B to take actions like answer a call or chat message. In case user B is not authenticated, user A (step S800) as well as other applications (step S900) are notified about the malicious user on the account of user B.

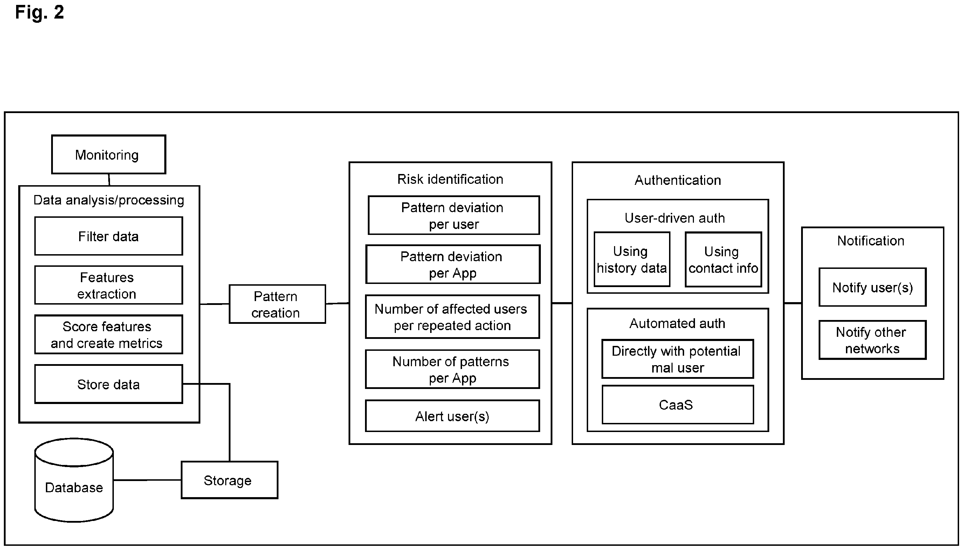

**Fig. 2** shows an overview of the system according to an embodiment of the present invention. The system may comprise four components, namely:
Component 1: Monitoring and data analysis/processing. This component may collect, filter, create and store patterns of the users' communication(s) on multiple social media and communication networks.
Component 2: Risk identification. This component may monitor the communication of the user in real time and may identify potential abnormalities.
Component 3: Authentication. This component may carry out an additional on demand user authentication using:
   a) user-driven data based on dynamic questions related to recent exchanges with the user that got hacked or with other contacts of said user, potentially on other social media or communication networks or based on personal contact info, and/or
   b) automated mechanisms to directly authenticate the malicious user by verifying his/her original contact details or with a Chat as a Service (CaaS) mechanism prompting him/her to reply on questions related to the exchanged communication.
Component 4: Notification. This component may be used for alerting the user that got hacked and the user who is already having a communication with said user, as well as for warning other users that are networked with said user as well as other networks of said user. Said notifications may be in the form of a call, a text message, or an e-mail.

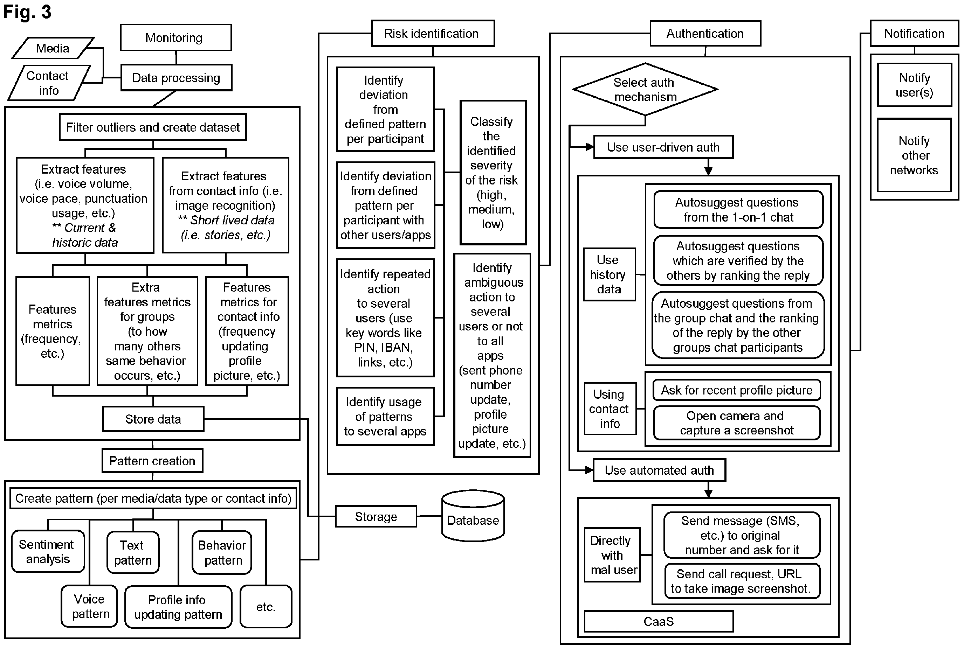

**Fig. 3** shows a flowchart of the system according to another embodiment of the invention. A first user may register to the system and upon his/her registration he/she may agree to provide access to his/her contact information like name, phone number, location, etc., profile information of the application(s) (i. e., (profile) picture, username, email, etc.) that he/she has signed up with, has installed on his/her devices, and uses. The system may store these user data in its storage for future use.

As already mentioned above, upon his/her registration, the first user has consented to the monitoring of the application(s) (i. e., communication(s) and/or social media) that he/she uses on his/her device. The system may monitor each activity that takes place on an application and may use these data to create a dataset by removing any outliers.

For example, the first user may use a communication app to chat with a second user. For each exchanged message, the system may track it, collect the text exchanged and meta data for it (i. e., sender, time, content type, etc.) and may remove un-utilizable data like empty space, conjunctions, etc. The collected data may be added to its dataset.

According to the invention, the system may keep different types of datasets, i. e., text datasets, using all the textual content exchanged from/with the first user. Media datasets, using all audio and video messages exchanged from/with the first user. Image datasets, using images related to the second user, collected from his/her profile picture(s), social media posts, social media short live content like stories, or from media broadcasted live.

From the datasets that are collected during the use of the various applications, the system may extract features using machine learning (ML) algorithms. The algorithms may be trained to predict patterns in various cases like:
- Text features including writing styles, i. e., long or short sentences, usage of abbreviations, usage of nicknames, usage of punctuation, following syntactic rules, using language mixings like "Denglisch", "Greeklish", etc.
- Voice features including voice volume, voice pace, usage of abbreviations, usage of language mixings, i. e., German with lots of English words, slang, etc.
- Image features including profile pictures, frequency of social media posts/updates, frequency of usage of short-lived content like stories, etc.
- Behavioral features including usage of text messages or voice messages, usage of punctuation, asking many details, communicating and frequently exchanging media content, etc.

According to the invention, features are extracted according to current and historic data (i. e., messages, chats, emails, etc.) and short-lived data (i. e., stories, etc.). Those extracted features may again be divided into features metrics like frequency, extra features metrics for groups (to how many others occurs the same behavior) and features metrics for contact info (frequency of profile picture update, etc.) These data may be stored into a database within the system.

For example, user B tends to use the same communication habits not only when talking with user A but also with other users either in a one-to-one conversation or in a group conversation. This is notified by the inventive system through the group chats with whom user A, user B, etc. have group conversations with. Further, other users registered to the inventive system may have given their consent to allow user B with whom they are also chatting to be monitored by the system. In that way, the system may recognize that indeed user B, when chatting for example, tends to have certain behaviors, i.e. writing with grammatical and syntactic correctness, using slang, asking too many questions for details, etc.

After extracting all the features, a combination of classification and clustering algorithms may be used to identify any patterns and correlations between the user's communication and interaction in the past (through his/her historic chat data) and the user's current activity and behavior. According to the present invention, patterns that may be useful for the system include sentiment analysis, text pattern, behavior pattern, voice pattern, profile info updating pattern, etc.

These patterns may be used in the risk identification component to calculate a score for the deviation from each of the different patterns as described above. This may be done using classification algorithms. The score of the deviation may be used to predict a risk for identity fraud.

There may be different types of deviation to be considered, like deviation from defined patterns per participant, deviation from defined patterns per participant when using other applications or interacting with other users, repeated actions to several users by using key words like PIN, IBAN, links, etc., usage of patterns to several applications. Additionally, using regression algorithms, the risk that a user, i. e., the second user, with whom the registered user, i. e., the first user, is communicating with is malicious, may continuously be identified and predicted. Here, the following types of patterns may be taken into account:
- an action may be repeated via a single application very often to the first user and/or several users (i. e., asking personal info like PIN, IBAN, password, etc.)
- a pattern may be repeatedly used by the second user to several apps (i. e., asking for key words like PIN to different social media and/or communication apps).

Based on the calculated score, the system may identify the severity of the risk of the second user being a malicious user. The severity of the risk is characterized as high, medium, or low, and may be taken into account in order to trigger the most appropriate authentication mechanism to proactively protect the first user.

After identification of a risk for identity fraud, the system may have different ways of authenticating the malicious user, either via a user-driven or an automated mechanism, or via a combination of both of said mechanisms. By default, the system may inform the first user about all low identified risks, and it may be up to said user to choose to proceed or not with the user-driven authentication mechanism. In this context, as will be described later in more detail, using the user-driven authentication mechanism, the first user may use history data by asking questions which are related to the communication with the potential hacker, or contact info by asking for a recent profile picture or to open the camera and capture a screenshot or a video feed. In this context, the first user may get assistance from the system which can suggest questions of previous conversations. Also, the first user may ask his/her own questions if he/she knows the answers to them, and the system may add these questions to its data/datasets. For all medium and high identified risks, the system may use the automated authentication mechanism. Thus, the system may directly contact the potential malicious user by sending a message to the original number of the second user and ask for it in return, or by sending a call request or a request to take a screenshot or a video feed, for example. If the system does not directly contact the potential malicious user, the system may use CaaS to authenticate the potential malicious user.

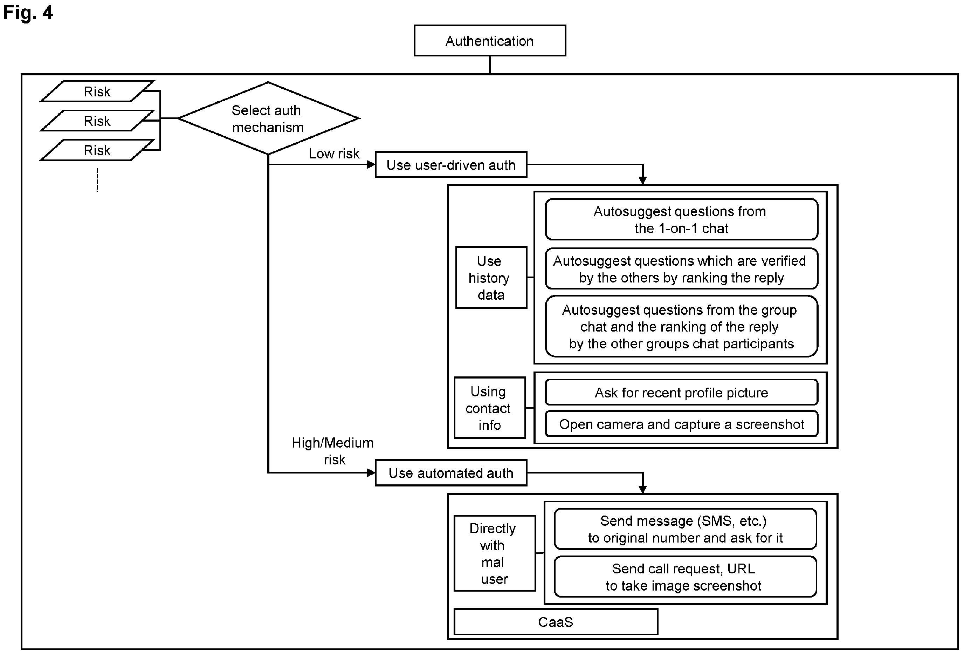

**Fig. 4** shows a detailed overview of the authentication mechanism according to an embodiment of the invention.

Once the first user is informed about an identified low risk, he/she may choose to either proceed with authenticating the second user with the guided assistance by the system or skip the authentication. In case he/she skips the authentication, the system may continue monitoring the activities with the second user, and it may prompt the first user in the future to authenticate the second user, or the system may proceed with the automated authentication mechanism if the level of risk is updated to a higher severity level.

As already mentioned above, if the first user accepts to perform an authentication of the second user by himself/herself, he/she may choose between using history data, contact info or real time media info like video stream or voice to answer certain questions.

Using history data, the system which has been monitoring the first user's history, may help said user to identify the risk of talking with a malicious user by autosuggesting questions from the one-to-one conversation with the second user, or autosuggesting questions from group conversations with the second user and other users. These questions may have already been verified and ranked by the first user and/or other users.

Using contact info, the system may use data of the second user that have already been collected, like profile pictures in the used chat application(s) as well as other apps, telephone number, etc. Here, the first user may, for example, be prompted to ask the second user, for a recent profile picture or to open the camera and capture a screenshot or a video feed, etc.

In case the system has identified a medium or high risk, it may try to authenticate the potential malicious user automatically by either directly contacting the malicious user or by using Chat as a Service (CaaS). To directly contact the potential hacker, the system may send a message (i. e., SMS, etc.) to the original number related to the potential malicious user, asking said user for that specific message in return, or send a call request or a URL where it may prompt the potential malicious user to take an image screenshot or a camera feed screenshot, etc.

In case of the CaaS, the system may redirect the communication to an external application provided by the system. Through this application, a communication channel may be opened with the potential malicious user. Said chat is used to try to authenticate the potential malicious user using one of the mechanisms previously described (like using history data, contact info, etc.) or combining one or more mechanisms as described above.

According to another preferred embodiment, the first user may be given the option of the authentication mechanisms of his/her preferences. For example, he/she may choose to be involved with user-driven authentication for all risks even those which may be authenticated in an automated mechanism by the system because they are identified as medium or high risks.

If the potential malicious user is not able to be authenticated, the notification component may inform all affected parties of the malicious user.

If the user identified through the risk identification component as a potential hacker was not authenticated in any way (user-driven and/or automated), said user is characterized as malicious in the system.

The first user who was the person directly interacting with the malicious user is notified of the malicious user and therefore proactively informed and protected. Additionally, all other users registered in the system and who interacted with the malicious user may also be notified and proactively protected.

In addition, the inventive system may use the mechanisms described above to inform other applications supporting a notification mechanism for reporting malicious users of the identified malicious user and proactively warn them of a potential risk for their system and users, too.

The system according to the present invention may also support an interface where other systems can register and be notified in case a user of theirs who is also registered in the inventive system is identified as malicious. In this way, the personal data of users are protected, and damage to users is prevented.

It should be noted that the term "comprising" does not exclude other elements or steps and the "a" or "an" does not exclude a plurality. Further, elements described in association with different embodiments may be combined.

It should also be noted that reference signs in the claims shall not be construed as limiting the scope of the claims.

### Reference numerals

- S100 - S900: various method steps
- CaaS: Chat as a Service
- SMS: short message service
- auth: authentication
- mal: malicious
- App: application

## Claims

1. A method for identity fraud detection and system agnostic user authentication in social media and communication applications, wherein the method comprises the steps of:
- S100 registering, by a first user/user device, to a system;
- S200 communicating, by the first user, with a second user;
- S300 monitoring, by the system, the activities of the two users on the application(s) to identify and notify malicious action(s);
- S400 taking over, by a malicious user, the account of the second user;
- S500 trying, by the malicious user, to take over the account of the first user;
- S600 identifying, by the system, a risk for malicious action(s);
- S700 triggering, by the system, a mechanism to authenticate the second user;
- S800 notifying, by the system, the first user, in case the authentication S700 is not successful;
- S900 notifying, by the system, other applications on the first user's device, in case the authentication in step S700 is not successful.

2. The method according to claim 1, wherein the step of registering of the first user further comprises:
granting, by the first user, consensus to monitor the activity and data during the usage of the application(s).

3. The method according to claim 2, wherein granting comprises providing access to the first user's contact information and profile information on the application(s) the first user has signed up with.

4. The method according to any one of the previous claims, wherein the step of monitoring comprises collecting, filtering, creating, and storing patterns of the first user's activity(s) and/or communication(s) on the application(s).

5. The method according to any one of the previous claims, wherein the patterns are stored using different datasets including text datasets, media datasets, and/or image datasets.

6. The method according to any one of the previous claims, wherein the activities of two or more users on the application(s) are monitored by the system.

7. The method according to claim 1, wherein the step of risk identification comprises using classification algorithms and/or regression algorithms.

8. The method according to claim 1, wherein the mechanism to authenticate the second user comprises a user-driven and/or an automated mechanism.

9. A system for identity fraud detection and system agnostic user authentication in social network and communication applications, wherein the system is configured to perform the method according to any one of the claims 1 to 8.

10. The system according to claim 9, comprising a monitoring component, a risk identification component, an authentication component and/or a notification component.

11. The system according to claim 10, wherein the monitoring component collects, filters, creates and stores patterns of the first user's communication on multiple social media and communication(s) applications the first user has signed up with.

12. The system according to claim 10, wherein the risk identification component monitors the communication(s) of the first user in real time and identifies potential abnormalities.

13. The system according to claim 10, wherein the authentication component carries out an additional on demand user authentication using
a) user-driven data based on dynamic questions related to recent exchanges or personal contact info, and/or
b) automated mechanisms used by the system to directly authenticate the potential malicious user with a Chat as a Service, CaaS, mechanism.

14. The system according to claim 10, wherein the notification component is used to alert the user that got hacked and to warn other users that are networked with said user, as well as other application(s) of said user.
